**Europäisches Patentamt**

(19) **European Patent Office**

**Office européen des brevets**

(11) Numéro de publication: **0 095 965 B1**

(12) **FASCICULE DE BREVET EUROPEEN**

(45) Date de publication du fascicule du brevet:
**19.02.86**

(21) Numéro de dépôt: **83401003.5**

(22) Date de dépôt: **20.05.83**

(51) Int. Cl.⁴: **B 62 D 5/083**, F 15 B 13/04,
F 16 K 3/30

(54) **Distributeur hydraulique rotatif et procédé de fabrication de bords de fermeture chanfreines d'organe rotatif d'un tel distributeur.**

(30) Priorité: **26.05.82 FR 8209133**

(43) Date de publication de la demande:
**07.12.83 Bulletin 83/49**

(45) Mention de la délivrance du brevet:
**19.02.86 Bulletin 86/8**

(84) Etats contractants désignés:
**DE GB IT**

(56) Documents cités:
**EP - A - 0 021 970
FR - A - 2 372 065**

(73) Titulaire: **BENDIBERICA S.A., Balmès 243,
Barcelona 6 (ES)**

(72) Inventeur: **Bacardit, Juan Simon, Calle Mallorca 451,
Barcelona 13 (ES)**

(74) Mandataire: **Le Moenner, Gabriel et al, SERVICE
BREVETS BENDIX 44, Rue François 1er, F-75008 Paris
(FR)**

ACTORUM AG

## Description

La présente invention concerne les distributeurs hydrauliques rotatifs pour systèmes d'actionnement hydrauliques, plus particulièrement pour systèmes de direction assistée de véhicules automobiles, du type comprenant deux organes axialement accolés et susceptibles de tourner l'un par rapport à l'autre sur une plage angulaire limitée sous l'action d'un moyen de commande, chaque organe comprenant au moins une ouverture débouchant dans sa face dirigée vers l'autre organe, les bords latéraux adjacents d'ouvertures associés coopérant mutuellement, lors de la rotation relative des organes, pour définir un passage de fluide allongé modulable entre lesdites ouvertures.

Historiquement, les distributeurs hydrauliques rotatifs ont été développés sous la forme d'un rotor cylindrique allongé disposé coaxialement dans une douille périphérique ou chemise, ces deux organes présentant des rainures axiales débouchant au niveau de l'interface entre les deux organes et coopérant sélectivement entre elles pour ménager des trajets sélectifs de fluide de travail en provoquant des variations de pression différentielle pour actionner un moteur hydraulique d'assistance. Dans ce type de distributeur, le découvrement ou l'occultation des rainures réalise des passages de fluide modulables aux dimensions latérales bien établies en raison de la parallélité des bords (axiaux) des rainures. Toutefois, pour des problèmes de bruits non négligeables lors de phases d'amorce d'ouverture de passage de fluide, les constructeurs ont été amenés à ménager dans les bords latéraux de fermeture des chanfreins permettant de rendre plus progressive cette phase d'ouverture (ou de fermeture) de passage de fluide. Une telle technique est décrite dans la demande de brevet européen N° 0012043 (D.B.A.).

Pour des questions de réduction de l'encombrement hors-tout des distributeurs hydrauliques rotatifs et permettre simultanément une plus grande souplesse dans les fonctions accomplies par le distributeur, la titulaire a mis au point des distributeurs hydrauliques rotatifs comprenant deux organes axialement accolés, suivant la technique dite du rotor en étoile, qui fait l'objet notamment de la demande de brevet français N° 2372065 au nom de la titulaire, dont le contenu est supposé intégré ici pour référence. Cette technique a, depuis lors, subi des développements intéressants, en ce sens que les formes des chanfreins des bords latéraux de fermeture des différents bras du rotor en étoile pouvaient être mis à profit pour contrôler les portions successives de la caractéristique couple d'entrée/pression de fluide d'actionnement du distributeur. Une telle technique fait notamment l'objet de la demande de brevet européen N° 0021970 au nom de la titulaire.

Or, contrairement aux distributeurs hydrauliques du type à rotor cylindrique et chemise périphérique, le déplacement angulaire relatif des deux organes axialement accolés pose des problèmes de désalignement angulaire des bords latéraux coopérants de chaque organe en raison des variations de rayon entre la base (proche du centre) et l'extrémité (plus éloignée du centre de rotation) de ces bords coopérants. De fait, en pratique, si, en position de repos du distributeur, les deux bords adjacents coopérants sont parallèles pour ménager entre eux un passage de fluide de forme générale rectangulaire, sous l'effet d'une rotation relative entre les deux organes visant, par exemple, à restreindre ce passage de fluide, ce passage prendra une forme en coin, c'est-à-dire avec une largeur variant suivant la longueur radiale du passage. Il s'ensuit une perte du contrôle effectif des dimensions optimales du passage, s'accompagnant d'un phénomène de recirculation dans le sens radial du fluide qui se traduit par des pertes de charges inopinées, l'apparition de bruits non négligeables, voire une instabilité intempestive du fonctionnement du distributeur. Ces phénomènes se trouvent encore accrus avec l'aménagement de bords de fermeture chanfreinés, c'est-à-dire en biseau simple ou, le plus souvent, avec des allures de degrés simples ou successifs.

La présente invention a précisément pour objet de proposer un distributeur hydraulique rotatif du type défini ci-dessus permettant d'obtenir, pour chaque décalage angulaire relatif entre les organes, un passage de fluide de dimensions contrôlées ayant une largeur sensiblement identique suivant la longueur du passage, en permettant ainsi d'obtenir un passage de fluide en régime laminaire sur la plus grande partie de la zone de passage, en évitant les phénomènes de circulation et les bruits hydrauliques.

La présente invention a pour autre objet de proposer un distributeur hydraulique rotatif permettant de contrôler efficacement les passages de fluide entre deux bords de fermetures coopérants des deux organes rotatifs.

Pour ce faire, selon une caractéristique de la présente invention, au moins un des bords latéraux coopérants d'un premier des organes est conformé pour présenter un chanfrein à profil évolutif déterminé de façon que le passage de fluide entre les bords coopérants ait, pour chaque décalage angulaire relatif des organes dans au moins une portion de la plage de rotation angulaire relative limitée de ces deux organes, une largeur identique suivant la longueur dans le sens radial du passage. Selon une autre caractéristique de la présente invention, le profil évolutif du chanfrein est une surface réglée à génératrices non parallèles.

La présente invention a pour autre objet de proposer un procédé de fabrication simple et fiable d'un tel bord chanfreiné d'organe de distributeur hydraulique rotatif.

Pour ce faire, selon une autre caractéristique de l'invention, le bord chanfreiné est matricé avec un poinçon présentant ledit profil et réalisé par électroérosion par fil.

D'autres caractéristiques et avantages de la présente invention ressortiront de la description suivante de modes de réalisation, donnés à titre illustratif mais nullement limitatif, faite en relation avec les dessins annexés, sur lequels:

la fig. 1 est une vue schématique de face d'un distributeur hydraulique rotatif à rotor en étoile conformément à un aspect de l'invention;

les fig. 2 et 3 illustrent schématiquement les problèmes rencontrés avec les techniques antérieures des distributurs rotatifs comportant des bords de fermeture chanfreinés mais droits;

les fig. 4 et 5 illustrent schématiquement les conditions de détermination des surfaces réglées des chanfreins de bords de fermeture des distributeurs hydrauliques selon l'invention;

les fig. 6 et 7 correpondant aux fig. 2 et 3 illustrent l'obtention de passages de fluide contrôlés avec les chanfreins selon l'invention;

la fig. 8 montre schématiquement le procédé de fabrication de poinçons pour la réalisation des chanfreins selon l'invention, et

la fig. 9 représente schématiquement une installation de matriçage pour l'obtention d'un rotor chanfreiné selon l'invention.

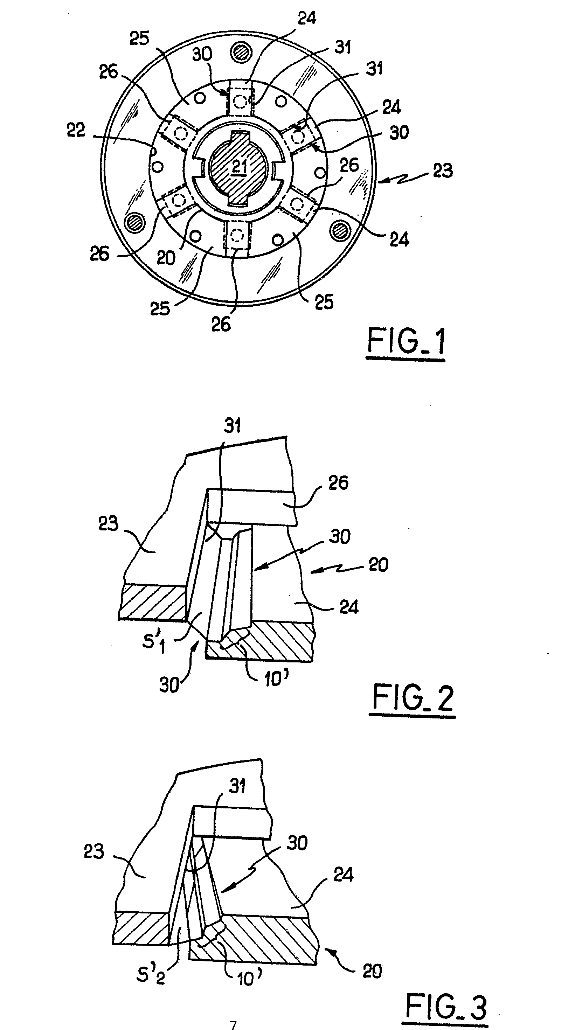

On a représenté schématiquement sur la fig. 1 un distributeur hydraulique rotatif du type auquel s'applique la présente invention (tel que décrit dans la demande de brevet français N° 2372065). Un tel distributeur comprend essentiellement un premier organe rotatif ou rotor 20 solidaire en rotation d'un arbre d'entrée de commande 21 et entièrement reçu dans une cavité discoïde 22 formée dans un second organe coaxial ou stator 23 solidaire en rotation d'un arbre de sortie (non représenté), un mécanisme d'accouplement à course morte (du type à barre de torsion ou à ressorts en C) reliant l'arbre d'entrée 21 et l'arbre de sortie pour permettre une rotation angulaire limitée du rotor 20 par rapport au stator 23. Les bras 24 du rotor 20 délimitent dans la cavité discoïde 22 un certain nombre de paires de chambres de fluide 25. Dans le stator 23 sont formées des ouvertures ou lumières 26 débouchant dans les parois latérales en regard de la cavité discoïde 22 au droit (en position de repos) d'au moins certains des bras 24 du rotor 20. Ainsi, les bords 30 des bras 24 du rotor coopèrent avec les bords 31 des lumières 26 pour ménager des communications sélectives entre les chambres 25 et ces lumières 26 et actionner ainsi, sous le fait d'une rotation relative du rotor 20 par rapport au stator 23 dans l'une ou l'autre direction, un moteur hydraulique double effet, par exemple, d'assistance d'un mécanisme de direction des roues motrices d'un véhicule automobile.

On a représenté à plus grande échelle sur les fig. 2 et 3 la zone de passage de fluide modulable entre les bords de fermeture latéraux 30 d'un rotor 20 et 31 de lumières 26 d'une paroi de stator 23. Comme susmentionné, au moins le bord de fermeture 30 d'un bras 24 du stator 20 présente une forme chanfreinée, typiquement en escalier 10'. Dans la position de repos représentée sur la fig. 2, le passage de fluide (illustré par la zone ombrée $S'_1$) a une section sensiblement rectangulaire, les arêtes adjacentes du stator et du chanfrein 10' du rotor étant sensiblement parallèles. Par contre, après accomplissement d'une rotation relative du rotor par rapport au stator 23, comme représenté sur la fig. 3, dans la technique antérieure à chanfreins droits, la forme du passage $S'_2$

du fluide délimité entre les bords coopérants des deux organes prend une allure complètement déformée suivant une surface gauche aux dimensions variant considérablement suivant la longueur radiale de la restriction entre les deux organes.

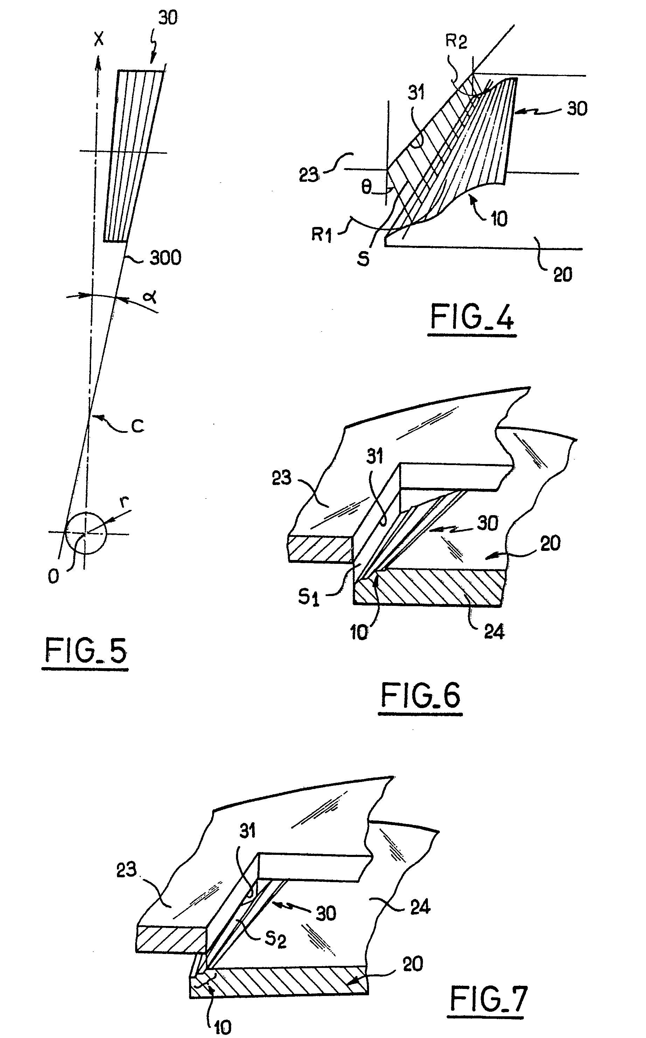

De fait, comme représenté sur la fig. 4 suivant l'approche de la présente invention, le passage où la restriction S entre l'arête 31 du stator 23 et la «zone» la plus proche du bord chanfreiné 30 ne s'effectue pas à l'aplomb de l'arête 31 mais suivant une surface décalée de cet aplomb d'un angle θ variable suivant le profil 10 du bord chanfreiné 30. Conformément à la présente invention, la surface du bord chanfreiné 30 est déterminée en fonction du profil transversal 10 choisi en fonction des effets poursuivis dans le fonctionnement du distributeur hydraulique de façon que, pour chaque position angulaire relative entre les deux organes 20 et 23, la «zone» susmentionnée du chanfrein soit une ligne droite parallèle à l'arête 31 du stator 23, la pente de cette ligne droite, vis-à-vis du plan de rotation commun des deux organes (perpendiculaire à l'axe du distributeur) étant déterminée pour que les rayons des cercles de contact $R_1$ extérieur et $R_2$ intérieur soient sensiblement égaux. Ainsi, comme représenté sur la fig. 5, compte tenu du fait que le plan de la surface de restriction S pour chaque position angulaire relative des deux organes 20 et 23 est décalée d'un angle θ variable par rapport à l'aplomb de l'arête 31 du stator 23 suivant le profil 10 adopté, en coupe transversale, pour le chanfrein, les génératrices, telles que la génératrice 300 du bord chanfreiné 30, convergent sensiblement vers une zone C décalée, sur l'axe OX, du centre de rotation commun O des deux organes, l'angle maximum α de la génératrice extrême 300 correspondant à l'angle de débattement angulaire autorisé entre les deux organes tournants. On aboutit ainsi, comme représenté sur les fig. 6 et 7, à une surface de chanfrein qui est une surface réglée à génératrices non parallèles, formant des degrés successifs d'amplitude latérale augmentant vers l'extérieur du rotor. De cette façon, si, comme représenté sur la fig. 6, la surface de passage au repos $S_1$ est effectivement rectangulaire, comme l'était sensiblement la surface $S'_1$ au repos de la technique antérieure, pour chaque position angulaire relative entre les deux organes 20 et 23, comme représenté sur la fig. 7, la surface de passage $S_2$, différente chaque fois, demeure à profil sensiblement rectangulaire, c'est-à-dire à largeur constante sur toute la longueur dans le sens radial du passage de fluide, et ce pour toute la plage annulaire de débattement limité entre les deux organes.

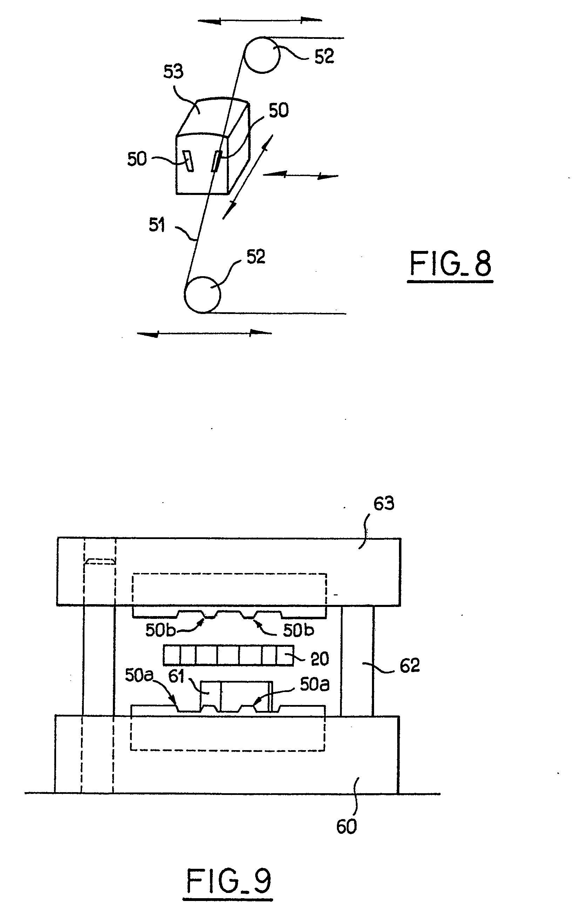

Conformément à la présente invention, la surface chanfreinée est obtenue par matriçage du bord du bras de rotor par un poinçon 50 présentant le même profil inversé. La surface gauche réglée de chaque poinçon 50 est réalisée dans une machine à électroérosion par fil comme représenté schématiquement sur la fig. 8. Avec cette technique, le fil 51 d'électroérosion peut être déplacé angulairement dans le plan de ses poulies de renvoi 52 en déplaçant sélectivement latéralement l'une et/ou l'autre de ces poulies 52 tandis que le bloc 53 portant les deux poinçons 50 à usiner peut être déplacé latéralement et d'avant en arrière comme figuré par les flèches sur la fig. 8. Une machine à électroérosion par fil pour la réalisation de tels poinçons est par exemple disponible commercialement sous l'appellation «AGIECUT DEM 315» auprès de la Société Anonyme AGIE de Locarno (Suisse).

On a enfin représenté schématiquement sur la fig. 9 une installation de matriçage des bords du rotor 20. On reconnaît, sur cette figure, le bâti 60 de la machine portant les poinçons inférieurs 50a, le dispositif de centrage 61 du rotor 20 et les colonnes de coulissement 62 pour le bâti supérieur 63 portant les poinçons supérieurs 50b pour le matriçage symétrique de chaque bord latéral des bras du rotor 20.

Quoique la présente invention ait été décrite en relation avec des modes de réalisation particuliers, elle ne s'en trouve pas limitée mais est au contraire susceptible de modifications et de variantes qui apparaîtront à l'homme de l'art. En particulier, la réalisation des bords chanfreinés de fermeture s'applique non seulement aux rotors du type en étoile mais également aux rotors en forme de disque à découpes internes dans les valves hydrauliques du type dit à glace. De même, quoique en pratique les bords de fermeture soient sensiblement radiaux, la technique selon la présente invention s'applique également à des bords de fermeture décalés angulairement de la direction radiale, l'arête de l'ouverture du stator servant en ce cas de direction de référence.

## Revendications

1. Distributeur hydraulique rotatif, comprenant au moins deux organes (20, 23) axialement accolés et susceptibles de tourner l'un par rapport à l'autre sur une plage angulaire limitée sous l'action d'un moyen de commande (21), chaque organe comprenant au moins une ouverture (25, 26) débouchant dans sa face dirigée vers l'autre organe, les bords latéraux adjacents (30, 31) d'ouvertures associées des deux organes coopérant mutuellement, lors de la rotation relative des organes, pour définir un passage de fluide allongé modulable ($S_i$) entre lesdites ouvertures, caractérisé en ce qu'au moins un desdits bords latéraux (30) d'au moins un premier (20) des organes est conformé pour présenter un chanfrein (30) à profil évolutif déterminé de façon que le passage de fluide $S_i$) entre les bords coopérants (30, 31) ait, pour chaque décalage angulaire relatif des organes dans au moins une portion de la plage de rotation angulaire relative limitée des deux organes, une largeur identique suivant la longueur du passage.

2. Distributeur selon la revendication 1, caractérisé en ce que le profil évolutif du chanfrein (30) est une surface réglée à génératrices non parallèles.

3. Distributeur selon la revendication 2, caractérisé en ce que le chanfrein (30) a, en vue en coupe transversale, un profil non linéaire (10).

4. Distributeur selon la revendication 3, caractérisé en ce que les génératrices du chanfrein (30) convergent sensiblement vers une zone (C) distante du centre de rotation commun (O) des deux organes (20, 23).

5. Distributeur selon l'une des revendications précédentes, caractérisé en ce que les bords coopérants (30, 31) sont sensiblement radiaux.

6. Distributeur selon la revendication 5, caractérisé en ce que ledit organe (20) formant ledit bord latéral chanfreiné (30) est un rotor en étoile à bras radiaux (24).

7. Procédé de fabrication d'un bord chanfreiné d'organe de distributeur hydraulique selon l'une des revendications précédentes, caractérisé en ce que le bord chanfreiné (30) est matricé avec un poinçon (50) présentant ledit profil évolutif.

8. Procédé selon la revendication 7, caractérisé en ce que le poinçon (50) est réalisé par électroérosion par fil.

## Claims

1. A rotary hydraulic distributor comprising at least two members (20, 23) axially adjacent and adapted to rotate with respect to each other through a limited angular range under the action of control means (21), each member comprising at least one opening (25, 26) formed in its face directed towards the other member, the adjacent lateral edges (30, 31) of associated openings of the two members cooperating with each other during relative rotation of the members to define a controllable elongated fluid passage ($S_i$) between said openings, characterized in that at least one of said lateral edges (30) of at least a first one (20) of said members is formed to present a chamfer (30) of a developing profile determined such that the fluid passage ($S_i$) between the cooperating edges (30, 31), for each relative angular displacement of the members within at least a portion of the limited relative angular range of rotation of the two members, is of identical width lengthwise of the passage.

2. Distributor according to Claim 1, characterized in that the developing profile of the chamfer (30) is a surface defined by non-parallel generating lines.

3. Distributor according to Claim 2, characterized in that the chamfer (30) has a transverse cross-section of a non-linear profile (10).

4. Distributor according to Claim 3, characterized in that the generating lines of the chamfer (30) converge substantially towards a zone (C) remote from the common center of rotation (O) of the two members (20, 23).

5. Distributor according to any of the preceding claims, characterized in that the cooperating edges (30, 31) are substantially radial.

6. Distributor according to Claim 5, characterized in that said member (20) forming said chamfered lateral edge (30) is a star-like rotor having radial arms (24).

7. A method of manufacturing a chamfered edge of a member of the hydraulic distributor according to any of the preceding claims, characterized in that the chamfered edge (30) is stamped by means of a die (50) having said developing profile.

8. A method according to Claim 7, characterized in that said die (50) is realized by wire-electroerosion.

**Patentansprüche**

1. Rotationshydraulischer Verteiler mit mindestens zwei Teilen (20, 23), die axial aneinander angesetzt sind und unter der Wirkung eines Steuerorgans (21) in einem begrenzten Winkelbereich relativ zueinander drehbar sind, wobei jedes Teil mindestens eine Öffnung (25, 26) aufweist, die in der dem anderen Teilzugewandten Stirnseite mündet, wobei die aneinander angrenzenden seitlichen Kanten (30, 31) der einander zugeordneten Öffnungen der beiden Teile bei der Relativdrehung der Teile miteinander zusammenwirken, um einen länglichen, steuerbaren Strömungskanal ($S_i$) zwischen den Öffnungen zu bilden, dadurch gekennzeichnet, dass mindestens eine der seitlichen Kanten (30) mindestens eines (20) der Teile so geformt ist, dass sie eine Fase (30) mit veränderlichem Profil aufweist, das so festgelegt ist, dass der Strömungsmittelkanal ($S_i$) zwischen den zusammenwirkenden Kanten (30, 31) für jede relative Winkelverschiebung der Teile in zumindest einem Abschnitt des begrenzten Winkelbereiches der beiden Teile die gleiche Breite über der Länge des Kanals besitzt.

2. Verteiler nach Anspruch 1, dadurch gekennzeichnet, dass das veränderliche Profil der Fase (30) ein Fläche ist, die von nichtparallelen Erzeugenden gebildet wird.

3. Verteiler nach Anspruch 2, dadurch gekennzeichnet, dass die Fase (30) im Querschnitt ein nichtlineares Profil (10) besitzt.

4. Verteiler nach Anspruch 3, dadurch gekennzeichnet, dass die Erzeugenden der Fase (30) in Richtung auf einen Bereich (C) konvergieren, der jenseits des gemeinsamen Drehpunktes (O) der beiden Teile (20, 23) liegt.

5. Verteiler nach einem der vorhergehenden Ansprüche, dadurch gekennzeichnet, dass die zusammenwirkenden Kanten (30, 31) praktisch radial verlaufen.

6. Verteiler nach Anspruch 5, dadurch gekennzeichnet, dass das Teil (20), das die profilierte seitliche Kante (30) bildet, ein sternförmiger Rotor mit radialen Armen (24) ist.

7. Verfahren zum Herstellen einer profilierten Kante eines Teils des hydraulischen Verteilers nach einem der vorhergehenden Ansprüche, dadurch gekennzeichnet, dass die profilierte Kante (30) durch Schmieden in einem Gesenk (50) hergestellt wird, das das besagte veränderliche Profil besitzt.

8. Verfahren nach Anspruch 7, dadurch gekennzeichnet, dass das Gesenk (50) durch Faden-Elektroerosion hergestellt wird.

FIG_1

FIG_2

FIG_3

**FIG_4**

**FIG_5**

**FIG_6**

**FIG_7**

9

FIG. 8

FIG. 9

11